# FASCICULE DE BREVET EUROPEEN

(11) **EP 2 950 216 B1**
(45) Date de publication et mention de la délivrance du brevet: **24.10.2018**
(21) Numéro de dépôt: 15169335.5
(22) Date de dépôt: 27.05.2015
(51) Int. Cl.: G06F 11/34

(54) **PROCÉDÉ ET DISPOSITIF D'AGRÉGATION SYNCHRONISÉE DE DONNÉES DE PERFORMANCE ET DE DONNÉES D'EXPLOITATION**
VERFAHREN UND VORRICHTUNG ZUR SYNCHRONISIERTEN ABSTIMMUNG VON LEISTUNGSDATEN UND BETRIEBSDATEN
METHOD AND DEVICE FOR SYNCHRONISED AGGREGATION OF PERFORMANCE DATA AND OPERATING DATA

(30) Priorité: 27.05.2014 FR 1454766
(43) Date de publication de la demande: 02.12.2015
(73) Titulaire: BULL SAS, 78340 Les Clayes sous Bois (FR)
(72) Inventeur: Bagnard, Natacha, 38100 Grenoble (FR); Demeilliez, Bruno, 38330 Montbonnot-Saint-Martin (FR); Keribin, Valérie, 38100 Grenoble (FR)
(74) Mandataire: Cabinet Camus Lebkiri

(56) Documents cités:
- EP-A2- 1 008 938
- US-A1- 2009 138 858
- US-A1- 2013 159 780
- US-A1- 2014 032 741

## Description

### DOMAINE TECHNIQUE DE L'INVENTION

L'invention se rapporte à un procédé de d'agrégation synchronisée de données de performance et de données d'exploitation.

Le domaine de l'invention est celui de la supervision des dispositifs de traitement automatisé de données tels que, par exemple, les serveurs de base de données et les serveurs d'applications. Le domaine de l'invention est en particulier celui des architectures multi tiers comportant au moins deux serveurs.

On entendra par serveur d'applications, dans le cadre du présent document tout dispositif susceptible de répondre à une requête à travers un canal de communication. Sont en particulier visés les serveurs dits web. Dans le cadre d'une architecture multi tiers, cela inclut au moins les serveurs de gestion de charge, les serveurs de traitement et les serveurs de base de données. A titre d'exemple on site, de manière non limitative les serveurs Apache, IIS, Tomcat, JBoss, GlassFish, Nginx... la liste n'est pas exhaustive.

D'une manière généralisée, l'invention s'étend à la gestion des traitements automatisés dont l'exécution est répartie sur plusieurs machines ou processus.

### ETAT DE LA TECHNIQUE ANTERIEURE

L'utilisation d'une application par un utilisateur met en oeuvre une chaîne de traitement dont la complexité devient rapidement importante. Par exemple un utilisateur, derrière son écran et un navigateur web, demande un traitement à un serveur frontal auquel il s'est préalablement connecté. Ce serveur frontal est, toujours par exemple, localisé dans un centre de données qui se trouve être géographiquement proche du poste de l'utilisateur. A partir de là, en fonction d'un contexte inconnu de l'utilisateur, le serveur frontal va émettre plusieurs requêtes, vers plusieurs autres serveurs localisé dans le même centre de données ou dans d'autres centre de données potentiellement très éloigné. L'un de ces autres serveurs va, par exemple, arrivé en saturation d'une ressource, par exemple une saturation de la mémoire, ce qui va créer, si ce n'est un écroulement, au moins une dégradation de la réactivité de l'application du point de vue de l'utilisateur qui a demandé le traitement.

Dans l'état de la technique, les équipes de maintenance vont constater la saturation de mémoire et entreprendre des actions curatives et éventuellement préventives pour faire en sorte que cela ne se reproduise pas. Au vue des informations dont elles disposent ces actions vont être effectuées au niveau de la machine sur laquelle la défaillance s'est produite. Dans la pratique les équipes vont probablement :
- Redémarrer la machine, ou
- Terminer un ou plusieurs processus pour libérer de la mémoire,
- Augmenter la capacité de la mémoire de la machine,
- Remplacer la machine,
- Doubler la machine, c'est-à-dire utiliser deux machines,

On est dans une stratégie de renforcement de l'architecture car c'est la seul permise par les données accessibles : le serveur X a saturé en mémoire. L'incident est donc géré de manière locale, c'est-à-dire du point de vue du serveur défaillant. Il s'agit pourtant bien d'une prise en compte de l'environnement global du serveur, mais avec des actions locales.

Il faut noter que le recours à cette stratégie est validé par la loi de Moore qui prédit l'augmentation constante de la puissance de traitement des machines.

Cependant cette stratégie n'est qu'une stratégie par défaut la plus commode qui implique, entre autre, une consommation croissante d'énergie, l'obsolescence prématurée de matériel, le maintien en exploitation d'applications comportant potentiellement des erreurs.

D'autres solutions existent pour l'analyse de la charge d'une application Web mais elles nécessitent l'instrumentation de l'application. Cette instrumentation nécessite des développements additionnels et a un fort impact sur les performances de l'application lorsqu'elle est activée. De ce fait, elle est rarement mise en place en production. Cette instrumentation consiste à demander à l'application d'effectuer des opérations supplémentaires pour signaler certaines opérations.

De plus ces solutions existantes sont généralement destinées à de l'évaluation d'application et l'étape de d'évaluation intervient le plus souvent après la mise en évidence des traitements qui peuvent poser problème en production et ce alors que l'application est encore en phase de développement voir même d'analyse.

D'autres solutions existent et permettent de récupérer des informations statistiques sur l'utilisation d'une application web. Malheureusement, ces solutions ont pour but d'avoir une vision globale de la fréquentation d'un site web et ne permettent pas d'analyser l'utilisation de l'application web aussi finement et librement que nécessaire. **On connaît également** EP 1 008 938 A2, qui décrit :
Procédé d'agrégation synchronisée de données de performance et de données d'exploitation à partir de fichiers correspondant à:
- L'enregistrement périodique horodaté, via une première horloge, d'au moins une donnée de performance, d'un premier serveur dans un premier fichier de suivi,
- L'enregistrement événementiel horodaté, via une deuxième horloge, d'au moins une trace d'activité en exploitation, par un deuxième serveur dans un deuxième fichier de suivi,
- Production (1020) d'un premier fichier de collecte, à partir d'au moins le premier fichier (1030) de suivi, selon les étapes suivantes mises en oeuvre pour chaque ligne du premier fichier de suivi :
- Calcul (1040) d'un identifiant de période par application d'une première fonction à l'horodatage de la ligne du fichier de suivi,
- Calcul (1050) d'un identifiant de données de performance
- Production (1120) d'un deuxième fichier de collecte, à partir d'au moins le deuxième fichier de suivi, selon les étapes suivantes mises en oeuvre pour chaque ligne du deuxième fichier de suivi :
- Calcul (1130) d'au moins un identifiant de période par application d'une troisième fonction à au moins l'horodatage de la ligne du deuxième fichier de suivi,
- Calcul (1140) d'un identifiant d'activité.

Aucune de ces solutions ne convient pour l'analyse de la charge d'une application Web. Elles sont soit trop haut niveau, soit trop bas niveau et ne proposent pas de méthode permettant la corrélation avec l'utilisation des ressources système.

### EXPOSE DE L'INVENTION

L'invention vise à remédier à tout ou partie des inconvénients de l'état de la technique identifiés ci-dessus, et notamment à proposer des moyens pour permettre de corréler des événements survenus sur différents serveur et donc d'avoir des éclairages différents sur les causes d'un incident survenu à une date connue.

Cela permet d'envisager d'autres stratégie d'intervention que le scale-out au niveau du serveur défaillant et donc de prolonger la durée d'exploitation d'une machine et même d'améliorer la qualité d'une architecture logicielle.

Dans ce dessein, un aspect de l'invention se rapporte à un procédé de d'agrégation synchronisée de données de performance et de données d'exploitation à partir de fichiers selon la revendication 1.

Outre les caractéristiques principales qui viennent d'être mentionnées dans le paragraphe précédent, le procédé/dispositif selon l'invention peut présenter une ou plusieurs caractéristiques complémentaires parmi les suivantes, considérées individuellement ou selon les combinaisons techniquement possibles:
- la première horloge et la deuxième horloge sont synchronisées par un serveur Protocole d'Heure Réseau ;
- la première horloge et la deuxième horloge sont synchronisées au moment de la production des fichiers de collecte par la prise en compte d'un décalage temporel mesuré par rapport à une troisième horloge de référence dans la première fonction et/ou dans la troisième fonction ;
- au moins une fonction de calcul d'identifiant est basée sur une liste d'au moins un couple de calcul, chaque couple de calcul associant un motif d'appariement et un identifiant, un identifiant renvoyé par la fonction de calcul est l'identifiant du couple de calcul dont le motif s'apparie à la ligne en cours du fichier de suivi ;
- au moins un motif est une expression régulière ;
- une liste de couple de calcul est associé à une fonction via un fichier de configuration ;
- les fonctions de calcul d'identifiant de période sont identiques, à la synchronisation près ;
- chaque fichier de suivi est associé aux fonctions requises pour la production du fichier de collecte associé via un fichier de configuration ;
- le deuxième fichier de collecte est produit à partir de plusieurs fichier Ni de suivi, chaque fichier Ni de suivi étant produit par un serveur Ni associé à une horloge Ni, chaque fichier Ni étant associé à une fonction Ni de calcul d'un identifiant de période et à une fonction Ni de calcul d'un identifiant d'activité, l'ensemble des serveurs Ni étant synchronisés ;

L'invention se rapporte également à un dispositif de stockage numérique comportant un fichier correspondant à des codes instructions mettant en oeuvre le procédé selon l'une des combinaisons possibles des caractéristiques précédentes.

L'invention se rapporte également à un dispositif mettant en oeuvre le procédé selon des combinaisons possibles des caractéristiques précédentes.

### BREVE DESCRIPTION DES FIGURES

D'autres caractéristiques et avantages de l'invention ressortiront à la lecture de la description qui suit, en référence aux figures annexées, qui illustrent :
- la figure 1, une vue d'une infrastructure matérielle permettant la mise en oeuvre du procédé selon l'invention ;
- La figure 2, une illustration d'étapes du procédé selon l'invention.

Pour plus de clarté, les éléments identiques ou similaires sont repérés par des signes de référence identiques sur l'ensemble des figures.

L'invention sera mieux comprise la lecture de la description qui suit et à l'examen des figures qui l'accompagnent. Celles-ci sont présentées à titre indicatif et nullement limitatif de l'invention.

### DESCRIPTION DETAILLEE D'UN MODE DE REALISATION

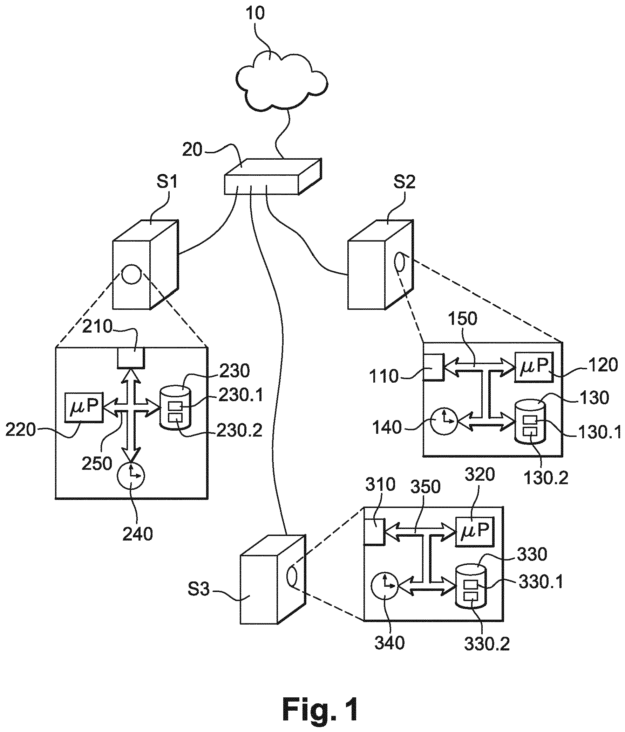

A la figure 1 est illustrée une infrastructure type permettant la production des données consommées par une mise en oeuvre de l'invention.

La figure 1 montre un premier serveur S1 connecté à un dispositif 20 d'interconnexion réseau. Le dispositif 20 d'interconnexion réseau est, par exemple, un commutateur réseau. La figure 1 montre que le premier serveur S1 comporte :
- Une interface 110 réseau, permettant la connexion du premier serveur S1 au dispositif 20 d'interconnexion,
- Un microprocesseur 120,
- Des moyens 130 de stockage,
- Une première horloge 140,
- Un bus 150 pour interconnecter au moins les précédents éléments du premier serveur S1.

Lorsque l'on prête une action à un dispositif celle-ci est en fait effectuée par un microprocesseur du dispositif commandé par des codes instructions enregistrés dans une mémoire du dispositif. Si l'on prête une action à une application, celle-ci est en fait effectuée par un microprocesseur du dispositif dans une mémoire duquel les codes instructions correspondant à l'application sont enregistrés. Les différents composant d'un dispositif communique en échangeant des messages via un bus. Le dispositif lui-même communique avec d'autres dispositifs en émettant et recevant des messages via une interface réseau.

La figure 1 montre que les moyens 130 de stockage du premier serveur comportent plusieurs zones :
- Une zone 130.1 comporte de codes instruction correspondant, par exemple, à :
   - Un système de gestion de base de données,
   - Un serveur de production de rapport,
   - Un serveur de calcul
   - ... la liste n'est pas exhaustive. La zone 230.1 correspond à des codes instructions correspondant à des fonctions sollicitées par un autre serveur pour permettre à cet autre serveur de produire des réponses à des requêtes reçues par cet autre serveur.

Une zone 130.2 comporte un premier fichier de suivi permettant l'enregistrement cadencé, c'est-à-dire à intervalle régulier de l'utilisation des ressources matérielles. Les ressources matérielles sont par exemple :
- L'utilisation du ou des processeurs,
- Le nombre de processus actif,
- Le nombre de fichier ouvert,
- La quantité de mémoire allouée,
- Le nombre d'accès disque en lecture et en écriture,
- Le nombre de page mémoire en défaut, c'est-à-dire une mesure de l'efficacité des mémoires cache,
- ... la liste n'est pas exhaustive.

Un tel premier fichier de suivi permet d'enregistrer pour chaque indicateur et pour chaque période une valeur. Une telle valeur est un enregistrement structuré, par exemple une ligne comportant, par exemple, une date de début de période, un identifiant d'indicateur et la valeur proprement dite.

Un tel premier fichier de suivi est produit, par exemple, par une application telle que nmon sous Linux, ou par l'application perfmon sous Windows. L'un des paramètres de ces applications de mesures est la période d'enregistrement des indicateurs. On parle d'un fichier périodique : c'est un fichier qui retrace un historique par période. Chaque ressource matérielle est associée à un code de ressource matérielle.

Les dates et durées écrites dans le premier fichier de suivi sont obtenues à partir de l'horloge 140 du premier serveur S1.

La figure 1 montre un deuxième serveur S2 connecté, par exemple, au réseau 10 Internet via le dispositif 20 d'interconnexion. La figure 1 montre que le deuxième serveur S2 comporte :
- Une interface 210 réseau, permettant la connexion du deuxième serveur S2 au réseau 10 internet,
- Un microprocesseur 220,
- Des moyens 230 de stockage,
- Une deuxième horloge 240,
- Un bus 250 pour interconnecter au moins les précédents éléments du deuxième serveur S2.

La figure 1 montre que les moyens 230 de stockage du deuxième serveur S2 comportent plusieurs zones :
- Une zone 230.1 comportant de codes instructions correspondant à une application serveur, par exemple un serveur web (serveur Apache, IIS, nginx) permettant de traiter des requêtes reçues via l'interface réseau du deuxième serveur S2. Le traitement des requête inclut des codes instructions correspondant à l'émission de requêtes vers le premier serveur S1 ;
- Une zone 230.2 correspondant à un deuxième fichier de suivi dans lequel le deuxième serveur S2, et en particulier l'application serveur web du deuxième serveur S2 écrit une ligne pour chaque requête reçue via l'interface réseau. Classiquement Une telle ligne comporte, en séquence éventuellement séparé par un caractère :
   - Un identifiant de serveur distant, le serveur ayant émis la requête,
   - Un identifiant de connexion si une connexion existe,
   - Un identifiant d'utilisateur, si l'utilisateur est authentifié,
   - Une date de réception de la requête,
   - La première ligne de la requête, cette première ligne comportant un code instruction correspondant à la nature de la requête ainsi que différents paramètres,
   - Le statut de la requête selon que son traitement a réussi ou non,
   - La taille de la réponse.

Le format décrit pour le deuxième fichier de suivi est un format de fichier de suivi classique. Il est facilement extensible, par exemple en ajoutant à chaque ligne une information de temps de traitement d'une requête. Il s'agit d'un simple paramétrage de l'application serveur web.

D'autre application utiliseront d'autres formats pour les lignes de fichier de suivi. Un fichier de suivi est aussi appelé un fichier de log, ou fichier de journalisation. On parle encore d'un fichier événementiel qui permet de connaître un historique d'événement. Si aucun événement ne survient, un tel fichier est vide, par opposition à un fichier périodique qui lui enregistre le fait qu'il ne s'est rien passé. Le principe reste identique pour toutes les applications : elles comportent des codes instructions pour journaliser leur activité selon un certain format de ligne de journalisation. Ce format de journalisation est paramétrable via un fichier de configuration.

Pour la journalisation sur le deuxième serveur S2, les dates et les durées sont obtenues à partir de l'horloge 240 du deuxième serveur S2.

La figure 1 montre un troisième serveur S3 comportant :
- Une interface 310 réseau, permettant la connexion du troisième serveur S3 au commutateur 20 réseau,
- Un microprocesseur 320,
- Des moyens 330 de stockage,
- Une horloge 340,
- Un bus 350 pour interconnecter au moins les précédents éléments du troisième serveur S3.

La figure 1 montre que les moyens 330 de stockage du troisième serveur S3 comportent plusieurs zones :
- Une première zone 330.1 comportant des codes instruction correspondant à la mise en oeuvre de l'invention ;
- Une deuxième zone 330.2 correspondant à un fichier de configuration de la mise en oeuvre de l'invention.

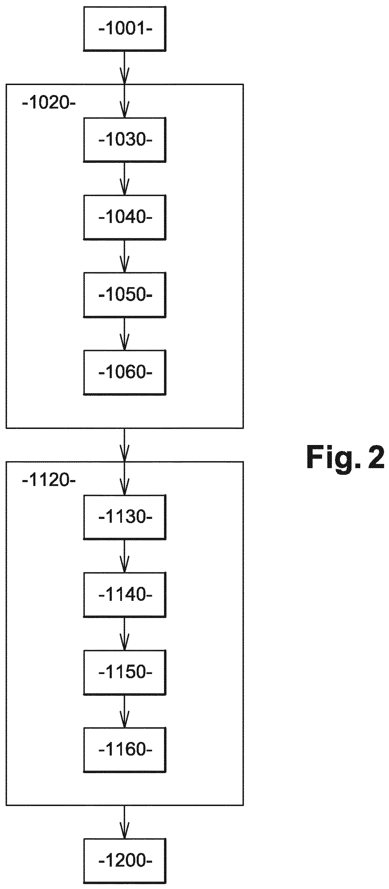

La figure 2 montre une étape 1001 de synchronisation de la première horloge et de la deuxième horloge. Il existe au moins deux façons de réaliser cette étape.

Dans une première variante le premier serveur et le deuxième serveur sont apte à se connecter à un même serveur de Protocol d'Heure Réseau, on parle d'un serveur NTP. Cela permet au premier serveur et au deuxième serveur de régler leur horloge respective à partir d'une même référence. La première horloge et la deuxième horloge sont alors synchronisées. On parle d'une synchronisation a priori : les fichiers de suivi sont produits synchronisés.

Dans une deuxième variante le fichier 330.2 de configuration de la mise en oeuvre de l'invention comporte, pour chaque serveur référencé par ce fichier de configuration, un décalage temporel à appliquer aux dates produites par ces serveurs. Un tel décalage temporel est mesuré, par exemple, en utilisant l'horloge du troisième serveur comme horloge de référence. On parle alors d'une synchronisation a posteriori : les fichiers de suivi sont synchronisés après leur production.

L'étape 1001 de synchronisation est suivie d'étapes correspondant à la production de fichiers de collecte. Ces productions se font, dans un mode de mise en oeuvre souple et adaptable, selon l'interprétation de données de configuration préalablement enregistrées dans le fichier 330.2 de configuration de la mise en oeuvre de l'invention.

Chaque fichier de collecte à produire est décrit dans le fichier de configuration 330.2 de mise en oeuvre de l'invention. La description d'un fichier de collecte à produire comporte au moins :
- Un identifiant de fichier de collecte, par exemple un nom de fichier à produire,
- Une description d'une fonction de calcul d'un identifiant de période,
- Une description d'une fonction de calcul d'un identifiant de performance ou d'un identifiant d'activité.
- Une liste d'au moins un fichier à utiliser pour produire le fichier de collecte.

L'ordre dans lequel les fichiers de collecte sont produits est sans impact sur les buts poursuivis par l'invention.

La figure 2 montre que l'étape 1001 est suivie d'une étape 1020 de production d'un premier fichier de collecte à partir du premier fichier de suivi. L'étape 1020 de production du premier fichier de collecte est mise en oeuvre par le troisième serveur S3.

L'étape 1020 comporte une première sous étape 1030 de récupération du premier fichier de suivi. Cette récupération est réalisée, par exemple, via au moins l'interface réseau du troisième serveur.

Les sous étapes suivantes de l'étape 1020 de production du premier fichier de collecte sont répétées pour chaque enregistrement du premier fichier de suivi récupéré. Dans la pratique un enregistrement correspond à une ligne mais l'invention rester pertinente pour un format fichier de fichier de suivi utilisant un autre séparateur d'enregistrement que la fin de ligne.

La sous étape 1030 de récupération du premier fichier de suivi est suivie d'une sous étape 1040 de calcul d'un identifiant de période. Ce calcul est réalisé par l'application d'une première fonction prenant comme paramètre au moins la ligne du fichier de suivi dont il faut calculer l'identifiant de période. Cette première fonction, comme les autres fonctions à venir est, soit codée en dure dans les codes instructions de mise en oeuvre de l'invention soit paramétré via le fichier 330.2 de configuration de la mise en oeuvre de l'invention.

Si la première fonction est codée en dure cela signifie que l'on attend un format prédéterminé pour la ligne du fichier de suivi. Sinon on adapte le comportement de la fonction de calcul via le fichier 330.1 de configuration de la mise en oeuvre de l'invention. Ce fichier est par la suite désigné comme « la configuration ». La configuration est, par exemple, un fichier XML ou Json permettant :
- d'associer de manière hiérarchique un fichier de collecte à au moins un fichier de suivi,
- d'associer un fichier de suivi à au moins une fonction de calcul d'identifiant.

La premier fonction est, par exemple :
- L'extraction d'une valeur par l'application d'une expression régulière, l'expression régulière est alors enregistrée préalablement dans la configuration
- L'extraction d'une valeur d'une valeur par l'utilisation d'un rang de colonne dans la ligne du fichier de suivi, le rang de colonne est alors préalablement enregistrée dans la configuration,
- L'extraction d'une partie, on parle de sous-chaîne, de la ligne du fichier de suivi ou l'extraction d'une partie du résultat de l'extraction selon l'un des modes précédents,
- L'application d'une fonction de hachage, ou de conversion, au résultat d'une extraction selon l'un des modes précédents
- La liste n'est pas exhaustive.

De préférence la première fonction extrait la partie de la ligne du fichier de suivi qui correspond à l'horodatage ou date de la ligne. Un autre exemple pour la fonction 1 est d'extraire la date de la ligne, selon un mode précédemment décrit, puis de l'arrondir au début d'une période de X secondes, X étant prédéterminé. Chaque heure comportant alors 3600 / X périodes.

De l'étape 1040 de calcul d'un identifiant de période par la première fonction on passe à une étape 1050 de calcul d'un identifiant de données de performance par une deuxième fonction.

Dans la pratique la deuxième fonction est similaire à la première fonction si ce n'est qu'elle n'extrait pas les mêmes données de la ligne du fichier de suivi et qu'elle utilise donc des paramètres d'extraction différents mais, bien sûr, appliqués à la même ligne du fichier de suivi. La deuxième fonction permet d'associer à chaque code de ressource matérielle un identifiant de données de performance. Il est aussi possible de regrouper plusieurs code de ressource matérielle sous un même identifiant de données de performance. Cela peut être pertinent, par exemple, pour regrouper plusieurs microprocesseurs ou coeur en un seul code et avoir une vision globalisée de l'utilisation des microprocesseurs.

L'étape 1050 de calcul d'un identifiant de données de performance est suivie d'une étape 1060apache de mise à jour du premier fichier de collecte en cours de production. Un fichier de collecte, tel que produit par l'invention, comporte au moins 3 colonnes :
- Une colonne identifiant de période,
- Une colonne identifiant de données de performance, ou identifiant d'activité, et
- Une colonne valeur qui est une valeur numérique.

Dans l'étape 1060 de mise à jour on recherche dans le premier fichier de collecte une ligne correspondant à l'identifiant de période et à l'identifiant de données de performance précédemment calculés. Si une telle ligne est trouvée alors on la mets à jour avec la valeur de la ligne du premier fichier de suivi. Cela revient à sommer les valeurs de la ligne du fichier de suivi et la ligne du fichier de collecte pour obtenir une nouvelle valeur pour la ligne trouvée dans le premier fichier de collecte. Si aucune ligne n'est trouvée alors on en insère une nouvelle construite à partir des identifiants calculés et de la valeur de la ligne du fichier de suivi.

Dans des variantes de l'invention on peut utiliser d'autre mode de mise à jour qu'une simple addition. On peut, par exemple, effectuer une moyenne.

De l'étape 1020 de production du premier fichier de collecte on passe à une étape 1120 de production d'un deuxième fichier de collecte à partir du deuxième fichier de suivi. L'étape 1120 de production du deuxième fichier de collecte est mise en oeuvre par le troisième serveur S3.

L'étape 1120 comporte une première sous étape 1130 de récupération du deuxième fichier de suivi. Cette récupération est réalisée, par exemple, via au moins l'interface réseau du troisième serveur.

Les sous étapes suivantes de l'étape 1130 de production du deuxième fichier de collecte sont répétées pour chaque enregistrement du deuxième fichier de suivi récupéré.

La sous étape 1130 de récupération du deuxième fichier de suivi est suivie d'une sous étape 1140 de calcul d'un identifiant de période. Ce calcul est réalisé par l'application d'une troisième fonction prenant comme paramètre au moins la ligne du fichier de suivi dont il faut calculer l'identifiant de période. Cette troisième fonction, comme les autres fonctions est, soit codée en dure dans les codes instructions de mise en oeuvre de l'invention soit paramétré via la configuration. La troisième fonction est similaire à la première fonction mais n'utilise pas forcément les mêmes paramètres. Les paramètres utilisés pour la troisième fonction correspondent à la structure de la ligne du fichier de suivi traité par la troisième fonction.

La première fonction et la troisième fonction tirent parti de la synchronisation entre les horloges. Des identifiants égaux produits par la première fonction et par la deuxième fonction correspondent à une même période temporelle. On note que si les fichiers de suivi utilisent le même format pour stocker les dates, alors les première fonction et troisième fonction sont identiques à la synchronisation près dans le cas d'une synchronisation post enregistrement de fichiers de suivi.

De l'étape 1140 de calcul d'un identifiant de période par la troisième fonction on passe à une étape 1150 de calcul d'un identifiant d'activité de performance par une quatrième fonction.

Les remarques faîtes pour la deuxième fonction s'appliquent pour la quatrième fonction.

Dans une variante de l'invention, pour limiter les temps de production des fichiers de collecte et permettre une utilisation plus ciblé du procédé selon l'invention, on filtre les lignes de fichiers de suivi selon des paramètres de date pour ne s'intéresser qu'à une seule période. La quatrième fonction permet de classer les lignes du deuxième fichier de suivi en fonction, par exemple, de la validation d'une expression régulière. Dans le cas d'une application web on peut utiliser les informations correspondant à la première ligne de la requête pour effectuer ce classement. Cette première ligne comporte en effet au moins un verbe http suivi d'une url. Il est alors aisé d'écrire une expression régulière permettant l'appariement sur les chaînes GET, POST ou autre.

L'étape 1150 de calcul d'un identifiant de données de performance est suivie d'une étape 1160 de mise à jour du deuxième fichier de collecte en cours de production. L'étape 1160 de mise à jour du deuxième fichier de collecte est identique à l'étape 1060 de production du premier fichier de collecte.

Dans une variante de l'invention la quatrième fonction renvoie plusieurs identifiant d'activité pour une ligne. Dans ce cas on met à jour plusieurs lignes dans le deuxième fichier de collecte. Ce cas est celui, par exemple, ou l'on souhaite compter les requête GET, mais aussi les requêtes GET /URL1. Dans ce cas une ligne du deuxième fichier de suivi comportant GET /URL1 validera deux cas et produira donc deux identifiants d'activité. Valider un cas signifie, par exemple, s'apparier avec une expression régulière.

Dans une variante de l'invention on utilise une pluralité fichiers de suivi pour produire le deuxième fichier de collecte. Chacun des fichiers de cette pluralité est traité à l'identique, avec les même fonctions de calcul d'identifiant ou avec des fonctions de calcul d'identifiant différentes. Cela revient à décrire dans la configuration la pluralité de fichier de suivi en associant à chaque fichier de suivi des paramètres à utiliser pour les troisième et quatrième fonctions.

Dans une mise en oeuvre préféré de l'invention au moins une fonction de calcul d'identifiant est basée sur une liste de couple de calcul : [motif, valeur d'identifiant]. Dans un tel couple de calcul le motif est, par exemple, une expression régulière, la valeur est une chaîne de caractère. Un même motif peut se retrouver dans plusieurs couples, une même valeur d'identifiant peut se retrouver dans plusieurs couples. Le principe de fonctionnement de la fonction est alors le suivant :
- Pour chaque couple :
   - Si la ligne correspond au motif
      - Ajouter la valeur à la sortie de la fonction
Ainsi il est possible d'obtenir plusieurs identifiant en sortie de la fonction. Dans ce cas on utilise un caractère prédéfini comme séparateur de valeur d'identifiant dans la sortie de la fonction.

Dans cette variante la liste de couple de calcul est associé à la fonction de calcul d'identifiant par la configuration.

L'étape 1120 de production du deuxième fichier de collecte, mais plus particulièrement l'étape 1020 de production du premier fichier de collecte est suivie d'une étape 1200 de recherche dans le premier fichier de collecte d'une ligne correspondant à un identifiant de donnée de performance prédéterminé, la ligne ayant de plus une valeur supérieure à un seuil prédéterminé. Si une telle ligne est trouvé alors elle correspond à un identifiant de période.

L'identifiant de période d'une telle ligne permet d'extraire du deuxième fichier de collecte des lignes correspondants à cet identifiant de période et, dans une variante, à des périodes temporellement voisine. Ces lignes extraites sont alors utilisé pour produire un message qui sera envoyé à un destinataire prédéterminé. Un tel message est aussi appelé un rapport. Le destinataire d'un tel message est alors en mesure :
- De savoir qu'une défaillance a eu lieu
- De diagnostiquer, au-delà de la machine défaillante les causes de la défaillance, et donc d'agir de manière plus efficace.

Toutes les étapes décrite, en particulier celles après la synchronisation, sont exécutés soir à la demande, soit via un planificateur de tâche qui les exécute à intervalle régulier. Cela permet d'obtenir des rapports périodiques et circonstanciés.

L'invention a été décrite pour un cas général. Il existe un cas particulier dans lequel le premier fichier de suivi et le deuxième fichier de suivi sont produits par le même serveur, c'est un dire le cas où le premier serveur S1 et le deuxième serveur S2 sont une seule et même machine. Dans ce cas l'enseignement de l'invention continue à s'appliquer et permet de croiser des données de performance avec des données d'activité de manière synchronisée.

## Revendications

1. Procédé de d'agrégation synchronisée de données de performance et de données d'exploitation à partir de fichiers correspondant à:
- L'enregistrement périodique horodaté, via une première horloge, d'au moins une donnée de performance, d'un premier serveur dans un premier fichier de suivi,
- L'enregistrement évènementiel horodaté, via une deuxième horloge, d'au moins une trace d'activité en exploitation, par un deuxième serveur dans un deuxième fichier de suivi,
- Synchronisation (1001) de la première horloge et de la deuxième horloge,
- Production (1020) d'un premier fichier de collecte, à partir d'au moins le premier fichier (1030) de suivi, selon les étapes suivantes mises en oeuvre pour chaque ligne du premier fichier de suivi :
- Calcul (1040) d'un identifiant de période par application d'une première fonction à l'horodatage de la ligne du fichier de suivi,
- Calcul (1050) d'un identifiant de données de performance, par application d'une deuxième fonction, **utilisant un motif d'appariement,** à la ligne du premier fichier de suivi,
- Recherche (1060) dans le premier fichier de collecte d'une ligne comportant l'identifiant de période calculé et l'identifiant de donnée de performance calculé : si une ligne est trouvée, mise à jour de la ligne trouvée en fonction de la ligne du premier fichier de suivi ; si aucune ligne n'est trouvée, insertion d'une nouvelle ligne en fonction de la ligne du premier fichier de suivi,
- Production (1120) d'un deuxième fichier de collecte, à partir d'au moins le deuxième fichier de suivi, selon les étapes suivantes mises en oeuvre pour chaque ligne du deuxième fichier de suivi :
- Calcul (1130) d'au moins un identifiant de période par application d'une troisième fonction à au moins l'horodatage de la ligne du deuxième fichier de suivi,
- Calcul (1140) d'un identifiant d'activité, par application d'une quatrième fonction, **utilisant un motif d'appariement,** à la ligne du deuxième fichier de suivi,
- Recherche dans le deuxième fichier de collecte d'une ligne comportant l'identifiant de période calculée et l'identifiant d'activité calculé : si une ligne est trouvée, mise à jour de la ligne trouvée en fonction de la ligne du deuxième fichier de suivi ; si aucune ligne n'est trouvée, insertion d'une nouvelle ligne en fonction de la ligne du deuxième fichier de suivi,
- Recherche (1200) dans le premier fichier de collecte d'une ligne correspondant à un identifiant de donnée de performance prédéterminé et ayant une valeur supérieure à un seuil prédéterminé,
- Si une ligne est trouvée dans le premier fichier de collecte, alors production et émission d'un message (1200) comportant des lignes du deuxième fichier de collecte, ces lignes correspondant à l'identifiant de période de la ligne trouvée dans le premier fichier de collecte.

2. Procédé d'agrégation selon la revendication 1, **caractérisé en ce que** la première horloge et la deuxième horloge sont synchronisées (1001) par un serveur Protocole d'Heure Réseau.

3. Procédé d'agrégation selon la revendication 1, **caractérisé en ce que** la première horloge et la deuxième horloge sont synchronisées (1001) au moment de la production des fichiers de collecte par la prise en compte d'un décalage temporel mesuré par rapport à une troisième horloge de référence dans la première fonction et/ou dans la troisième fonction.

4. Procédé d'agrégation selon l'une des revendications précédentes, **caractérisé en ce que** au moins une fonction de calcul d'identifiant est basée sur une liste d'au moins un couple de calcul, chaque couple de calcul associant un motif d'appariement et un identifiant, un identifiant renvoyé par la fonction de calcul est l'identifiant du couple de calcul dont le motif s'apparie à la ligne en cours du fichier de suivi.

5. Procédé d'agrégation selon la revendication 4, **caractérisé en ce que** au moins un motif est une expression régulière.

6. Procédé d'agrégation selon l'une des revendications 4 à 5, **caractérisé en ce qu'**une liste de couple de calcul est associée à une fonction via un fichier de configuration.

7. Procédé d'agrégation selon l'une des revendications précédentes, **caractérisé en ce que** les fonctions de calcul d'identifiant de période sont identiques, à la synchronisation près.

8. Procédé d'agrégation selon l'une des revendications précédentes, **caractérisé en ce que** chaque fichier de suivi est associé aux fonctions requises pour la production du fichier de collecte associé via un fichier de configuration.

9. Procédé d'agrégation selon l'une des revendications précédentes, **caractérisé en ce que** le deuxième fichier de collecte est produit à partir de plusieurs fichiers Ni de suivi, chaque fichier Ni de suivi étant produit par un serveur Ni associé à une horloge Ni, chaque fichier Ni étant associé à une fonction Ni de calcul d'un identifiant de période et à une fonction Ni de calcul d'un identifiant d'activité, l'ensemble des serveurs Ni étant synchronisés.

10. Dispositif de stockage numérique comportant un fichier correspondant à des codes instructions mettant en oeuvre le procédé selon l'une des revendications précédentes.

11. Dispositif mettant en oeuvre le procédé selon l'une des revendications 1 à 9.

## Patentansprüche

1. Verfahren zur synchronisierten Aggregation von Leistungsdaten und Betriebsdaten ausgehend von Dateien, die entsprechen:
- der periodischen, zeitgestempelten Speicherung wenigstens einer Leistungsangabe aus einem ersten Server in einer ersten Verfolgungsdatei über eine erste Zeituhr;
- der zeitgestempelten Ereignisspeicherung wenigstens einer Aktivitätsspur in Betrieb durch einen zweiten Server in einer zweiten Verfolgungsdatei über eine zweite Zeituhr,
- Synchronisation (1001) der ersten Zeituhr und der zweiten Zeituhr,
- Anlegen (1020) einer ersten Erfassungsdatei ausgehend von wenigstens der ersten Verfolgungsdatei (1030) gemäß den folgenden Schritten, die für jede Zeile der ersten Verfolgungsdatei umgesetzt werden:
∘ Berechnung (1040) einer Periodenkennung per Anwendung einer ersten Funktion auf die Zeitstempelung der Zeile der Verfolgungsdatei,
∘ Berechnung (1050) einer Leistungsdatenkennung per Anwendung einer zweiten Funktion **unter Verwendung eines Abgleichsmotivs** auf die Zeile der ersten Verfolgungsdatei,
∘ Recherche (1060) in der ersten Erfassungsdatei einer Zeile, die die berechnete Periodenkennung und die berechnete Leistungsdatenkennung umfasst: wenn eine Zeile gefunden ist, Aktualisierung der gefundenen Zeile in Abhängigkeit von der Zeile der ersten Verfolgungsdatei; wenn keine Zeile gefunden ist, Einfügen einer neuen Zeile in Abhängigkeit von der Zeile der ersten Verfolgungsdatei,
- Anlegen (1120) einer zweiten Erfassungsdatei ausgehend von wenigstens der zweiten Verfolgungsdatei gemäß den folgenden Schritten, die für jede Zeile der zweiten Verfolgungsdatei umgesetzt wurden:
∘ Berechnung (1130) wenigstens einer Periodenkennung per Anwendung einer dritten Funktion auf wenigstens die Zeitstempelung der Zeile der zweiten Verfolgungsdatei,
∘ Berechnung (1140) einer Aktivitätskennung per Anwendung einer vierten Funktion **unter Verwendung eines Vergleichsmotivs** auf die Zeile der zweiten Verfolgungsdatei,
∘ Recherche einer die berechnete Periodenkennung umfassende Zeile und der berechneten Aktivitätskennung in der zweiten Erfassungsdatei: Wenn eine Zeile gefunden ist, Aktualisierung der gefundenen Zeile in Abhängigkeit von der Zeile der zweiten Verfolgungsdatei; wenn keine Zeile gefunden ist, Einfügen einer neuen Zeile in Abhängigkeit von der Zeile der zweiten Verfolgungsdatei,
- Recherche (1200) einer Zeile, die einer vorbestimmten Leistungsdatenkennung entspricht und einen höheren Wert als einen vorbestimmten Schwellenwert hat, in der ersten Erfassungsdatei,
- Wenn eine Zeile in der ersten Erfassungsdatei gefunden ist, dann Produktion und Ausgabe einer Meldung (1200), umfassend Zeilen der zweiten Erfassungsdatei, wobei diese Zeilen der Periodenkennung der in der ersten Erfassungsdatei gefundenen Zeile entsprechen.

2. Verfahren zur Aggregation gemäß Anspruch 1, **dadurch gekennzeichnet, dass** die erste Zeituhr und die zweite Zeituhr durch einen Server Netzstundenprotokoll synchronisiert sind (1001).

3. Verfahren zur Aggregation gemäß Anspruch 1, **dadurch gekennzeichnet, dass** die erste Zeituhr und die zweite Zeituhr zum Zeitpunkt der Anlage der Erfassungsdateien durch die Berücksichtigung einer zeitlichen Verschiebung, die im Verhältnis zu einer dritten Referenzzeituhr in der ersten Funktion und / oder in der dritten Funktion gemessen ist, synchronisiert sind (1001.

4. Verfahren zur Aggregation gemäß einem der voranstehenden Ansprüche, **dadurch gekennzeichnet, dass** wenigstens eine Kennungsberechnungsfunktion auf einer Liste wenigstens eines Berechnungspaares basiert, wobei jedes Berechnungspaar ein Abgleichsmotiv und eine Kennung zuordnet, eine von der Berechnungsfunktion zurückgesandte Kennung die Kennung des Berechnungspaares ist, dessen Motiv mit der laufenden Zeile der Verfolgungsdatei abgeglichen wird.

5. Verfahren zur Aggregation gemäß Anspruch 4, **dadurch gekennzeichnet, dass** wenigstens ein Motiv eine regelmäßige Expression ist.

6. Verfahren zur Aggregation gemäß einem der Ansprüche 4 bis 5, **dadurch gekennzeichnet, dass** eine Berechnungspaarliste einer Funktion über eine Konfigurationsdatei zugeordnet ist.

7. Verfahren zur Aggregation gemäß einem der voranstehenden Ansprüche, **dadurch gekennzeichnet, dass** die Berechnungsfunktionen der Periodenkennung bis auf die Synchronisation identisch sind.

8. Verfahren zur Aggregation gemäß einem der voranstehenden Ansprüche, **dadurch gekennzeichnet, dass** jede Verfolgungsdatei den Funktionen zugeordnet ist, die für das Anlegen der zugeordneten Erfassungsdatei über eine Konfigurationsdatei notwendig sind.

9. Verfahren zur Aggregation gemäß einem der voranstehenden Ansprüche, **dadurch gekennzeichnet, dass** die zweite Erfassungsdatei ausgehend von mehreren Verfolgungsdateien Ni angelegt ist, wobei jede Verfolgungsdatei Ni durch einen einer Zeituhr Ni zugeordneten Server Ni angelegt ist, wobei jede Datei Ni einer Berechnungsfunktion Ni einer Periodenkennung und einer Berechnungsfunktion Ni einer Aktivitätskennung zugeordnet ist, wobei alle Server Ni synchronisiert sind.

10. Digitale Speichervorrichtung, umfassend eine Datei, die Anweisungscodes entspricht, die das Verfahren gemäß einem der voranstehenden Ansprüche umsetzt.

11. Vorrichtung, die das Verfahren gemäß einem der Ansprüche 1 bis 9 umsetzt.

## Claims

1. A method for synchronously aggregating performance data and operating data from files corresponding to:
- timestamped periodic recording, via a first clock, at least one performance datum, from a first server in a first tracking file,
- timestamped event-driven recording, via a second clock, at least one activity trace in operation, by a second server in a second tracking file,
- synchronising (1001) the first clock and the second clock,
- generating (1020) a first collecting file, from at least the first tracking file (1030), according to the following steps implemented for each line of the first tracking file:
- computing (1040) a period identifier by applying a first function to timestamping of the line of the tracking file,
- computing (1050) an identifier of performance data, by applying a second function, using a matching pattern, to the line of the first tracking file,
- searching (1060) in the first collecting file a line including the computed period identifier and the computed identifier of performance data: if a line is found, updating the found line as a function of the line of the first tracking file; if no line is found, inserting a new line as a function of the line of the first tracking file,
- generating (1120) a second collecting file, from at least the second tracking file, according to the following steps implemented for each line of the second tracking file:
- computing (1130) at least one period identifier by applying a third function to at least the timestamping of the line of the second tracking file,
- computing (1140) an activity identifier, by applying a fourth function, using a matching pattern, to the line of the second tracking file,
- searching in the second collecting file a line including the computed period identifier and the computed activity identifier: if a line is found, updating the found line as a function of the line of the second tracking file; if no line is found, inserting a new line as a function of the line of the second tracking file,
- searching (1200) in the first collecting file a line corresponding to a predetermined identifier of performance data and having a value greater than a predetermined threshold,
- if a line is found in the first collecting file, then generating and transmitting a message (1200) including lines of the second collecting file, these lines corresponding to the period identifier of the found line in the first collecting file.

2. The aggregating method according to claim 1, **characterised in that** the first clock and the second clock are synchronised (1001) by a Network Time Protocol server.

3. The aggregating method according to claim 1, **characterised in that** the first clock and the second clock are synchronised (1001) at the time of generating the collecting files by taking into account a time shifting measured relative to a third reference clock in the first function and/or the third function.

4. The aggregating method according to one of the previous claims, **characterised in that** at least one identifier computing function is based on a list of at least one computation pair, each computation pair associating a matching pattern and an identifier, an identifier sent back by the computing function is the identifier of the computation pair the pattern of which matches the current line of the tracking file.

5. The aggregating method according to claim 4, **characterised in that** at least one pattern is a regular expression.

6. The aggregating method according to one of claims 4 and 5, **characterised in that** a list of computation pair is associated with a function via a configuration file.

7. The aggregating method according to one of the previous claims, **characterised in that** the period identifier computation functions are identical, down to the synchronisation.

8. The aggregating method according to one of the previous claims, **characterised in that** each tracking file is associated with the functions required for generating the associated collecting file via a configuration file.

9. The aggregating method according to one of the previous claims, **characterised in that** the second collecting file is generated from several Ni tracking files, each Ni tracking file being generated by an Ni server associated with an Ni clock, each Ni file being associated with an Ni function for computing a period identifier and with an Ni function for computing an activity identifier, all the Ni servers being synchronised.

10. A digital storing device including a file corresponding to instruction codes implementing the method according to one of the previous claims.

11. The device implementing the method according to one of claims 1 to 9.
